# DEMANDE DE BREVET EUROPEEN

(11) **EP 4 458 741 A1**
(43) Date de publication de la demande: **06.11.2024**
(21) Numéro de dépôt: 24172908.6
(22) Date de dépôt: 29.04.2024
(51) Int. Cl.: B65G 47/54

(54) **TABLE DE TRANSFERT**

(30) Priorité: 03.05.2023 FR 2304427
(71) Demandeur: Exotec Product France, 59170 Croix (FR)
(72) Inventeur: CAGNAC, Bastien, 59290 WASQUEHAL (FR); NIBOULIES, Léa, 59800 LILLE (FR); KHIER, Franck, 59800 LILLE (FR)
(74) Mandataire: Plasseraud IP

(57) **Abrégé**

L'invention porte sur une table de transfert (1) comprenant : un premier ensemble de convoyage (2) définissant un premier plan (23) de convoyage d'articles ; un second ensemble (4) de convoyage définissant un second plan (43) de convoyage d'articles ; et un mécanisme de montée-descente (6) du premier et/ou du second ensembles (2, 4), comprenant une came (61) ayant un chemin de roulement (611) et une paire de galets suiveurs (62, 64) respectifs aux ensembles de convoyage (2, 4) et coopérant avec le chemin de roulement (611) de la came (61), la came (61) étant mobile en pivotement entre : une première position, dans laquelle le premier plan (23) est disposé au-dessus du second plan (43) ; et une seconde position, dans laquelle le second plan (43) est disposé au-dessus du premier plan (23).

## Description

### Domaine technique

La présente divulgation relève du domaine des systèmes de stockage et de récupération automatiques (ASRS en anglais pour « automatic storage and retrieval systems »). Ces systèmes comprennent généralement une structure de stockage (magasin) dans laquelle des articles sont stockés à l'unité ou sur des supports appropriés (plateaux, palettes, etc.). L'amenée et la récupération des articles vers le magasin de stockage s'effectuent par des séries de convoyeurs et d'aiguillages, pilotées avec un haut degré d'automatisation. Les convoyeurs peuvent être de différents types comme par exemple à rouleaux, à bande, à chaîne, des transstockeurs, des robots, etc. Les enjeux principaux sont liés à la rapidité et la fiabilité de la prise en charge et de l'extraction des articles, mais aussi la compacité du système, ainsi que la garantie de ne pas endommager les articles manipulés. En effet, les changements de direction, les accélérations et les ralentissements sont le lieu potentiel d'endommagement des articles. C'est le cas par exemple des tables de transfert, qui sont des modules de convoyeurs permettant d'aiguiller un article dans une direction transverse à la direction principale selon laquelle l'article est convoyé.

### Technique antérieure

Le document de brevet JP 6 140 467 B décrit une table de transfert permettant d'opérer un changement de direction dans une ligne de convoyage. Un certain nombre de rouleaux de convoyage, espacés les uns des autres, forme un ensemble qui est mobile verticalement. Entre chaque paire de rouleaux adjacents peut venir s'intercaler une courroie convoyeuse. Lorsqu'un article transporté par les rouleaux, dans une première direction, doit être dévié, les rouleaux s'abaissent et les courroies s'élèvent pour venir supporter l'article et le convoyer dans une direction perpendiculaire à cette première direction.

Le mécanisme permettant la montée et la descente des rouleaux et des courroies comprend huit cames coopérant avec autant de galets suiveurs. Cette conception est lourde, peu économique, encombrante et complexe. Aussi, ce mécanisme nécessite un alignement précis des huit cames pour maîtriser l'horizontalité des convoyeurs. Ces inconvénients deviennent particulièrement problématiques dans un magasin de stockage ou dans une ligne de convoyage, qui peuvent comprendre un grand nombre de tables de transfert de ce type.

### Résumé

La présente divulgation permet de répondre à ces problèmes, en proposant une conception plus fiable mais aussi plus simple, et donc plus économique et plus légère.

Il est proposé une table de transfert comprenant : un premier ensemble comprenant un premier châssis portant une pluralité de premiers éléments de convoyeur espacés deux à deux et définissant un premier plan de convoyage d'articles ; un second ensemble comprenant un second châssis portant une pluralité de seconds éléments de convoyeur espacés deux à deux et définissant un second plan de convoyage d'articles ; et un mécanisme de montée-descente du premier et/ou du second ensemble(s), comprenant une came ayant un chemin de roulement et une paire de galets suiveurs coopérant avec le chemin de roulement de la came, l'un des galets suiveurs étant porté par le premier châssis et l'autre étant porté par le second châssis, la came étant mobile en pivotement entre : une première position, dans laquelle le premier plan est disposé au-dessus du second plan ; et une seconde position, dans laquelle le second plan est disposé au-dessus du premier plan.

La coopération de deux galets appartenant à deux ensembles cinématiques distincts avec la même came, et plus précisément avec le même chemin de came, permet d'obtenir un mécanisme de montée-descente qui est plus compact, plus simple, plus léger et plus fiable que les systèmes connus. S'il peut être avantageux de manipuler les deux ensembles, il est également possible de prévoir qu'un seul des deux convoyeurs soit mobile verticalement : son mouvement à lui seul déterminera lequel des deux plans est au-dessus de l'autre. Dans ce cas, le convoyeur immobile sera malgré tout pourvu d'un galet suiveur, même si celui-ci roulera sur une portion de chemin de roulement cylindrique pour conserver le convoyeur immobile verticalement. Le système sera flexible car par un seul remplacement de la came, le convoyeur immobile deviendra mobile.

Selon un autre aspect, la came est une première came et la paire de galets suiveurs est une première paire, le mécanisme de montée-descente comprenant une seconde came et une seconde paire de galets suiveurs, l'un des galets suiveurs de la seconde paire étant porté par le premier châssis et l'autre étant porté par le second châssis. Ce système permet de maîtriser avec une bonne fiabilité la hauteur d'au moins une ligne géométrique de chacun des ensembles.

Selon un autre aspect, le mécanisme de montée-descente comprend une bielle reliant la première came à la seconde came, la bielle étant rattachée par pivot à la première came et à la seconde came en des points respectifs tels que le mouvement des cames s'opère dans des sens opposés.

Selon un autre aspect, le mécanisme de montée-descente comprend une bielle reliant la première came à la seconde came, la bielle étant rattachée par pivot à la première came et à la seconde came en des points respectifs tels que le mouvement des cames s'opère dans des sens identiques.

Les bielles permettent de synchroniser de façon simple et fiable les mouvements des différentes cames et donc la hauteur des ensembles de convoyage.

Selon un autre aspect, le chemin de roulement présente une ou deux butées de fin de course angulaire. Ceci permet de contrôler précisément le mouvement vertical des convoyeurs sans recourir à des capteurs, des actionneurs et/ou des boucles de contrôle.

Selon un autre aspect, la première et la seconde cames comprennent chacune une ou deux butées de fin de course angulaire configurées d'une manière telle que lorsqu'une des butées ou la butée de la première came engage un galet porté par le premier châssis, respectivement porté par le second châssis, une des butées ou la butée de la seconde came engage simultanément un galet porté par le premier châssis, respectivement porté par le second châssis. La présence de plusieurs butées permet de reprendre les efforts ou les jeux latéraux pour obtenir un maintien précis des convoyeurs dans les positions extrêmes.

Selon un autre aspect, un moteur électrique est disposé coaxialement à l'axe de pivotement de la (première) came. Cette conception est particulièrement compacte.

Selon un autre aspect, le moteur électrique est à rotor extérieur, la (première) came étant formée ou rapportée sur le rotor extérieur.

Alternativement, le moteur peut être déporté et être relié à la came par une courroie ou une chaîne d'entraînement.

Selon un autre aspect, le chemin de roulement comprend une portion dite commune sur laquelle roulent l'un puis l'autre des galets lors du pivotement de la came de la première position jusqu'à la seconde position.

Selon un autre aspect, le chemin de roulement a une longueur curviligne et la portion commune s'étend sur 10 à 30% de la longueur curviligne du chemin de roulement.

Selon un autre aspect, la portion commune s'étend sur un angle du chemin de roulement compris entre 10° et 60°.

Selon un autre aspect, la table de transfert comprend une troisième came et une quatrième came, ainsi qu'une troisième paire de galets suiveurs et une quatrième paire de galets suiveurs, les troisième et quatrième cames et paires étant agencées symétriquement aux première et seconde cames et paires, par rapport à un plan médian de la table de transfert. Cette configuration permet de maîtriser particulièrement précisément l'horizontalité (ou l'inclinaison, si tel est désiré) des plans de convoyage.

Selon un autre aspect, le débattement angulaire entre la première position et la seconde position est compris entre 30 et 180°. En fonction du diamètre de la came et des galets, et du débattement en hauteur des convoyeurs, la came peut être optimisée pour obtenir un changement de configuration aussi rapide que possible tout en se prémunissant d'à-coups éventuels.

Selon un autre aspect, la ou les cames peuvent être pivotées dans une position angulaire médiane dans laquelle le premier et le second plans coïncident. Il peut ainsi être prévue une position neutre, angulairement entre la première et la deuxième position. Depuis cette position, le premier ou le second convoyeur peuvent être rapidement sélectionné pour convoyer les articles. La position de la came dans laquelle les plans coïncident peut être la position de plus haute altitude. Ceci permet de ne pas translater la charge convoyée verticalement et de ne jamais modifier le plan de convoyage.

L'invention porte également sur un procédé de transfert d'articles au moyen de la table de transfert décrite ci-dessus, le procédé comprenant : le convoyage d'un article par le premier ensemble, le pivotement de la came depuis la première position vers la seconde position, puis le convoyage de l'article par le second ensemble.

Selon un autre aspect, le pivotement de la came depuis la première position vers la seconde position s'effectue selon un premier sens de pivotement et le procédé comprend en outre une étape de pivotement de la came depuis la seconde position vers la première position s'effectuant selon un second sens de pivotement, opposé au premier sens de pivotement. Ainsi, et contrairement à certains systèmes connus ; il n'est nul besoin d'effectuer un tour complet de la came avant de pouvoir retrouver la première position.

### Brève description des dessins

D'autres caractéristiques, détails et avantages apparaîtront à la lecture de la description détaillée ci-après, et à l'analyse des dessins annexés, sur lesquels :
**Fig. 1**

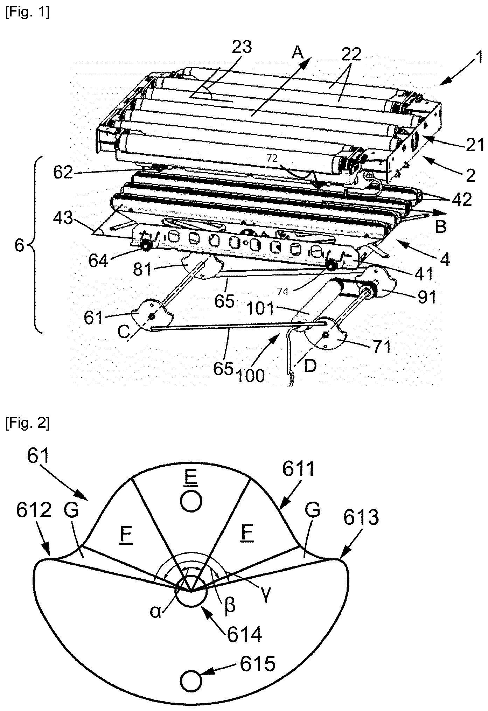

   [Fig. 1] montre un éclaté de la table de transfert selon un mode de réalisation.
**Fig. 2**
   [Fig. 2] montre une came utilisable dans la table de transfert selon un mode de réalisation.
**Fig. 3**

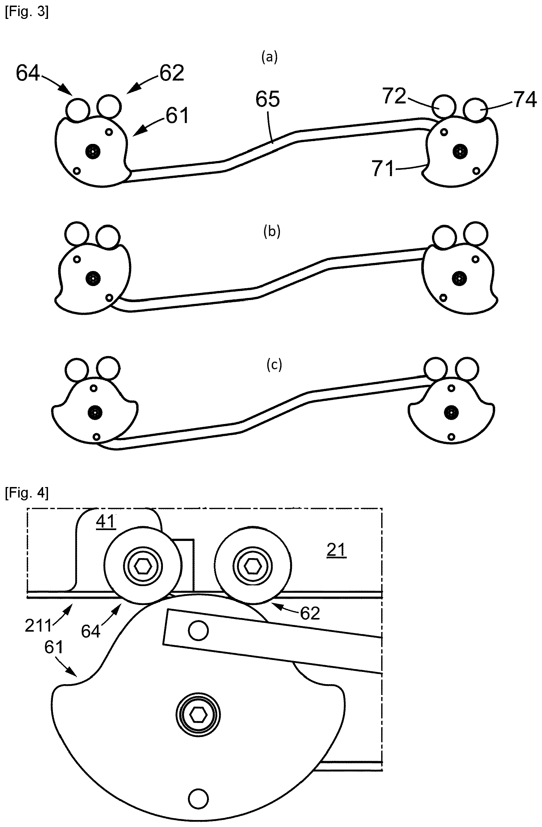

   [Fig. 3] montre trois positions angulaires de la came ainsi que des galets suiveurs.
**Fig. 4**
   [Fig. 4] montre un détail des châssis du mécanisme de montée-descente.
**Fig. 5**

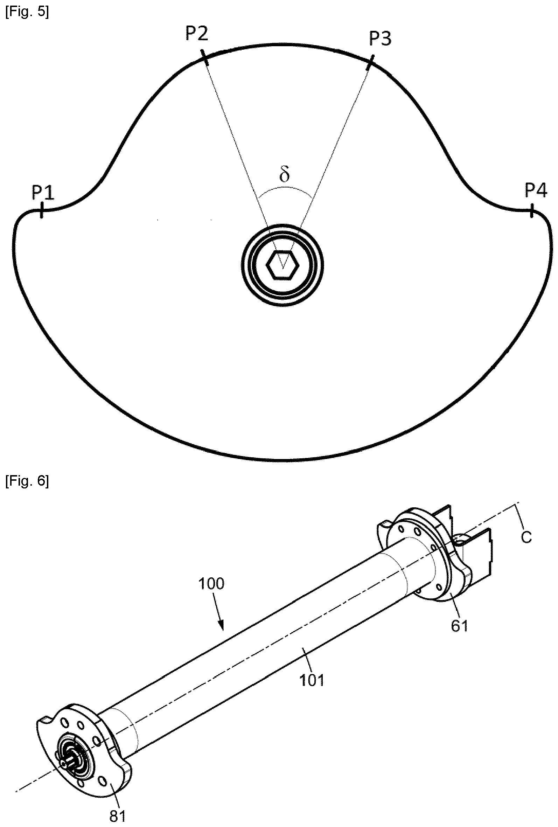

   [Fig. 5] met en évidence la portion commune du chemin de came.
**Fig. 6**
   [Fig. 6] montre une came directement formée sur le rotor d'un moteur électrique.

### Description des modes de réalisation

La figure 1 montre un éclaté d'une table de transfert 1 selon l'invention. La table de transfert 1 est composée de trois éléments principaux, un premier ensemble 2 convoyeur, un second ensemble 4 convoyeur et un mécanisme de montée-descente 6 des premier et second ensembles 2, 4.

Le premier ensemble 2 est un convoyeur qui transporte des articles (non représentés) selon la direction A. Le second ensemble 4 est un convoyeur qui transporte des articles (non représentés) selon la direction B. La direction B n'est pas parallèle à la direction A et peut être perpendiculaire à la direction A.

Le premier ensemble 2 comprend un premier châssis 21 sur lequel est agencée une pluralité de premiers éléments de convoyeur 22. Dans l'exemple illustré sur la figure 1, ces éléments sont des rouleaux 22. Alternativement, ces éléments peuvent être des sections de bandes convoyeuses, de chaînes ou de courroies, ou tout autre type de convoyeur équivalent. Au moins un des éléments convoyeurs 22 peut être motorisé, par des moyens moteurs portés par le châssis 21 ou par des moyens moteurs déportés, en connexion cinématique avec au moins un des éléments 22. Alternativement, aucun des éléments 22 n'est motorisé et les articles sont convoyés par gravité ou entraînés par des moyens extérieurs.

Les éléments 22 sont agencés de sorte à laisser entre certains d'entre eux un interstice. Cet interstice est suffisamment petit pour ne pas entraver le bon convoyage des articles convoyés.

Comme illustré sur la figure 1, les rouleaux 22 peuvent être de longueur et/ou de diamètre différents. Ils sont toutefois alignés selon un plan 23 qui est un plan sur lequel reposent les articles convoyés. Le plan 23 peut être horizontal ou incliné par rapport à l'horizontale.

Le second ensemble 4 comprend un second châssis 41 sur lequel est agencée une pluralité de seconds éléments 42. Dans l'exemple illustré, les seconds éléments sont des courroies mais d'autres types d'éléments convoyeurs peuvent être prévus (chaînes, rouleaux, etc.). Les seconds éléments 42 peuvent être de même longueur ou de différentes longueurs. Par exemple, des courroies de différentes longueurs peuvent être employées pour pivoter les articles convoyés autour d'un axe vertical afin de modifier leur orientation avant et/ou pendant leur transport. Les seconds éléments 42 sont alignés pour former un second plan 43 de convoyage.

Au moins un des éléments convoyeurs 42 peut être motorisé, par des moyens moteurs portés par le châssis 41 ou par des moyens moteurs déportés, en connexion cinématique avec au moins un des éléments 42.

Le premier ensemble 2 et le second ensemble 4 sont mobiles verticalement. Alternativement, comme discuté plus loin, seul un des deux ensembles 2, 4 est mobile verticalement. Les interstices respectifs entre les premiers éléments 22 et entre les seconds éléments 42 sont tels que les seconds éléments 42 peuvent pénétrer dans les interstices entre les seconds éléments et vice versa, en accord avec le mouvement relatif vertical des premier et second châssis 21, 41. Ainsi, les articles sont convoyés selon la direction A lorsqu'ils reposent sur le plan 23 des éléments 22 ou selon la direction B lorsqu'ils reposent sur le plan 43 des éléments 42. Dans un repère absolu, les plans 23 et 43 peuvent occuper la même altitude au moment de la transition entre le transport d'un article par les éléments 22 et par les éléments 42. Cette même altitude peut être l'altitude maximale que peuvent prendre les plans 23, 43 lors du déplacement vertical des ensembles 2, 4. Alternativement, les ensembles 2, 4 peuvent convoyer les articles chacun à une altitude différente.

Le mouvement vertical des premier et second ensembles 2, 4 est réalisé par un mécanisme de montée-descente 6. Ce mécanisme 6 comprend une came 61 qui coopère avec une paire de galets suiveurs 62, 64. L'un des galets 62 est porté par le premier châssis 21 et le second galet 64 est porté par le second châssis 41. Ces deux galets 62, 64 roulent sur un chemin de roulement (noté 611 sur la figure 2) de la came 61. La came 61 pivote autour d'un axe C qui est fixe dans un repère absolu. Ainsi, le pivotement de la came 61 engendre la montée et la descente des galets 62 et 64. L'axe des galets suiveurs 62, 64 est fixe par rapport aux châssis respectifs 21, 41.

Dans un mode de réalisation non illustré, une seule came suffit au mouvement vertical des châssis 21, 41. Il suffit en effet qu'un point des châssis 21, 41 soit soulevé/abaissé pour que les éléments de convoyeur 22, 42 prennent alternativement leur fonction de convoyage des articles transportés. Les plans 23 et 43 peuvent ainsi varier en inclinaison pour successivement convoyer les articles. Les plans 23 et 43 peuvent aussi être maintenus horizontaux par tout moyen adapté, par exemple par des actionneurs passifs (glissières, ressorts, compensation d'assiette, etc.) ou actifs (capteurs d'inclinaison, vérins, moteurs électriques, etc.).

Le mécanisme 6 peut comprendre une seconde came 71 pivotant autour d'un axe D et suivie par une seconde paire de galets suiveurs 72, 74, portés respectivement par le premier et le second châssis 21, 41. La cinématique de la seconde came 71 est identique à celle de la première came 61. La seconde came 71 peut être indépendante en pivotement de la première came 61 afin de régler l'altitude de deux points des châssis 21, 41 indépendamment.

Toutefois, dans l'exemple illustré en figure 1, les deux cames 61, 71 sont reliées par une bielle 65 de telle sorte que leur pivotement soit synchrone. Le chemin de roulement des cames 61, 71 peut être choisi pour que les altitudes des galets respectifs soient différentes mais dans un exemple privilégié, les chemins de roulement sont tels que les galets 62, 72 du premier ensemble 2 (resp. les galets 64, 74 du second ensemble 4) soient à la même altitude pour toute position angulaire des cames 61 71.

Dans l'exemple illustré, la bielle 65 est reliée (en pivot) en des positions différentes des cames 61, 71. En particulier, des points diamétralement opposés ont été choisis pour que le pivotement des deux cames 61, 71 s'opère dans des sens opposés. Les points de pivots peuvent être plus rapprochés l'un de l'autre, c'est-à-dire que dans une position médiane (voir figure 3(c)), les pivots des bielles ne sont pas alignés verticalement avec le centre des cames mais décalés angulairement d'une valeur comprise entre 5 et 10°, par exemple environ 8°. Le décalage est vers la droite pour la came de gauche, et il se fait vers la gauche pour la came de droite.

Le mouvement des cames en sens inverse permet aux efforts latéraux qui sont dus au poids des ensembles 2, 4, appliqués sur une came soient compensés par les efforts appliqués sur l'autre came. Les cames sont donc moins sollicitées et les châssis sont autocentrés.

Dans ce cas, les cames peuvent être sensiblement symétriques. Un léger déphasage, fonction de la longueur de la bielle, de l'entraxe entre C et D, et du rayon du point de rattachement de la bielle, peut être à prendre en compte. Ce déphasage a été calculé comme négligeable pour les ordres de grandeurs indiqués plus bas. Dans le cas inverse, c'est-à-dire lorsque le déphasage n'est pas négligeable, les chemins de roulement des cames 61 et 71 ne seront pas choisis comme étant symétriques l'un par rapport à l'autre.

Selon une alternative non illustrée, la bielle 65 est liée aux cames en des points identiques et les deux cames 61, 71 pivotent dans le même sens. Dans ce cas, les cames 61, 71 peuvent être identiques s'il est souhaité que l'altitude des galets soit la même pour toute position angulaire des cames 61, 71.

L'exemple illustré sur la figure 1 montre également une troisième 81 et une quatrième came 91. Celles-ci peuvent être solidaires en pivotement des première et seconde cames 61, 71 sur les axes C et D. Alternativement, les troisième et quatrième cames peuvent être excentrées voire être disposées à des altitudes différentes. Elles peuvent aussi être reliées par une bielle 65. Dans le mode de réalisation illustré, les deux bielles 65 sont agencées pour assurer un pivotement en sens opposé des cames 81 et 91 mais par analogie avec ce qui précède, la bielle 65 reliant les troisième et quatrième cames 81, 91 peut aussi assurer un mouvement de même sens pour ces cames 81, 91.

La came 61 ou au moins une des cames 61, 71, 81, 91 peut être entraînée en pivotement par un moteur électrique 100. Le rotor 101 du moteur 100 peut être connecté à une came ou à un axe des cames par tout moyen approprié (courroie, chaîne, réducteur ou train d'engrenage, etc.).

Ainsi, le principe général de fonctionnement de la table de transfert 1 est le suivant : un article provenant d'un convoyeur non représenté arrive sur la table de transfert 1. Il est convoyé selon la direction A par le premier ensemble 2. Le moteur 100 est actionné pour pivoter la ou les cames 61, 71, 81, 91 pour que le plan 43 monte puis que le plan 23 descende, les éléments 42 s'introduisant entre les interstices séparant les éléments 22. L'entraînement des éléments 22 peut avoir cessé avant ou pendant la montée du châssis 41. Le moteur 100 est mis à l'arrêt lorsque l'article qui reposait sur les éléments 22 repose sur les éléments 42. Les éléments 42 sont ensuite mis en mouvement pour transporter l'article dans la direction B.

Une fois l'article évacué de la table de transfert 1, le moteur 100 peut être engagé en sens contraire pour faire redescendre le plan 43 et faire remonter le plan 23.

Le moteur 100 peut s'arrêter dans une position médiane ou d'attente, par exemple dans laquelle les plans 23 et 43 coïncident.

De façon avantageuse, comme représenté sur la figure 1, les différentes cames et les différents galets sont identiques. Ceci permet de faciliter la fabrication, les réglages fins lors de l'assemblage, la logistique ou la maintenance. Toutefois, l'invention n'est pas limitée à cette configuration et l'homme du métier comprendra que des variations peuvent être opérées sur les galets ou les cames.

La figure 2 montre en détail un exemple d'une came 61 qui peut être utilisée dans la table transfert 1.

La came 61 présente un chemin de roulement 611 (ou ruban de roulement 611) qui est formé d'une surface continue sans angularité. Les galets suiveurs 62, 64 reposent, du fait de leur propre poids et de celui des ensembles 2, 4, sur ce chemin de roulement 611. Les galets 62, 64 roulent principalement sans glissement sur le chemin de roulement 611.

Le chemin de roulement 611 peut dessiner un profil ayant une symétrie par rapport à l'axe vertical Z de la figure 2. Il est entendu que le chemin de roulement 611 peut être choisi afin d'obtenir une cinématique particulière en termes de position, vitesse et accélération verticales de chaque galet.

Dans l'exemple illustré, le chemin de roulement 611 peut être « découpé » en cinq zones. Une zone centrale E peut être caractérisée par une distance au centre O de la came qui peut être sensiblement constante, c'est-à-dire en arc de cercle. Dans une zone F et vu depuis la zone E, le chemin de roulement 611 se rapproche du centre de la came. Un galet suiveur au contact de la zone F confèrera donc une altitude plus basse au châssis correspondant qu'un galet au contact de la zone E. Enfin, une zone G constitue une butée 612, 613 caractérisée par un éloignement franc du chemin de roulement 611 du centre de la came. Un galet au contact de la butée 612, 613 bloque le pivotement de la came. Par exemple, le rayon de courbure des zones G peut être inférieur au rayon des galets. Une pente importante dans la zone G est une autre façon d'obtenir un coincement de la came par le galet. La butée forme en quelques sortes un "mur" colinéaire a l'axe de pivot de la came 61 et tangent au galet. Ainsi, même un couple très grand disponible sur la came ne permet aucune translation verticale du galet. Cette butée implique également une position angulaire de la came stable et donc une position verticale des ensembles de convoyage stable. Ces positions stables garantissent une indexation de la position de la came même en cas de défaillance du contrôle du moteur.

Dans une variante non illustrée, la came 61 ne comprend pas de butée, ou n'en comprend qu'une seule.

L'ordre de grandeur des zones E, F et G peut être illustré au moyen des angles α, β et γ. Ceux-ci peuvent respectivement se situer dans les plages suivantes : [5 ;50], [10 ;150] et [30 ;180]. Les angles sont choisis en fonction de la cinématique désirée pour les ensembles 2 et 4, et/ou en fonction des diamètres respectifs des cames et des galets, et/ou en fonction de la vitesse de permutation souhaitée entre les différentes configurations de la table de transferts.

Dans une alternative non représentée, la came n'est pas symétrique. Il peut par exemple être prévu une asymétrie sur le mouvement des châssis 21, 41. Par exemple un des châssis peut avoir un débattement vertical plus petit, ou une vitesse de déplacement vertical différente.

Dans une alternative, un des deux ensembles 2, 4 est immobile verticalement et les cames sont ainsi prévues pour que les galets correspondant à l'ensemble immobile roulent sur une portion du chemin de roulement qui est purement cylindrique. La table de transfert fonctionne ainsi comme des « pop-up », c'est-à-dire que les articles convoyés par les éléments 22 sont subitement déviés de leur trajectoire par les éléments 42 qui peuvent être des poussoirs, qui s'intercalent entre les éléments 22. Un tel système est flexible puisqu'il suffit de remplacer la came ayant une portion cylindrique qui rend l'ensemble 2, 4 correspondant immobile verticalement, par une came comme discuté plus haut, grâce à laquelle les deux ensembles sont mobiles verticalement.

La figure 2 montre également un orifice central 614 recevant un arbre pour le pivotement de la came autour de l'axe C, et un orifice déporté 615 pouvant être utiliser pour relier la bielle 65 à la came 61.

La figure 3 montre trois positions distinctes du mécanisme de montée-descente utilisant la came 61 de la figure 2. La position (a) montre les galets 62, 72 du premier ensemble au contact de la zone E des cames respectives 61, 71 alors que les galets 64, 74 du second ensemble sont en butée au contact de la zone G des cames. Cette position correspond à la « première position » décrite plus haut, dans laquelle le plan 23 est au-dessus du plan 43. Dans cette position, les articles sont convoyés par les éléments 22.

La position (b) est la « seconde position » discutée plus haut, dans laquelle le plan 43 est au-dessus du plan 23. En effet, dans cette position, les galets 62, 72 du premier ensemble 2 sont en butée dans la zone G des cames alors que les galets 64, 74 du second ensemble 4 sont au contact de la zone E des cames. Dans cette position, les articles sont convoyés par les éléments 42.

Les positions (a) et (b) montrent que les galets 64, 74 ou 62, 72 sont simultanément au contact des butées des différentes cames, ce qui permet une indexation de la position des plans 23, 43 dans des positions stables mécaniquement, et permet de s'affranchir des imprécisions qui pourraient être liées au contrôle précis de la position angulaire du moteur électrique.

Dans l'exemple illustré, le débattement angulaire entre la première position (a) et la seconde position (b) est tel que, par exemple, le galet 61 passe d'une extrémité de la zone E à l'extrémité de la zone G opposée. Ce débattement vaut (α+γ)/2 et est compris entre 30 et 180°. Dans cette configuration, la zone E est une portion commune, partagée par le parcours des deux galets, le reste du chemin 611 n'étant parcouru que par un seul des deux galets. Cette configuration améliore encore la compacité du mécanisme de montée-descente.

Si l'exemple illustré sur la figure 3 montre des mouvements de cames de sens opposé lors du passage d'une position à une autre position, dans une alternative non représentée, la première came 61 et la seconde came 71 peuvent pivoter dans le même sens.

Enfin, la position (c) correspond à une position médiane, dans laquelle les galets sont tous à la même altitude, au contact de la zone E des cames. Dans cette position, les plans 23 et 43 coïncident.

La figure 3 illustre également le fait que la bielle 65 puisse avoir une forme plus ou moins complexe et elle n'est pas nécessairement rectiligne. Sa forme peut notamment être choisie pour éviter des interférences mécaniques avec d'autres corps lors du déplacement de la bielle.

La distance entre les axes des cames 61, 71 peut être de plusieurs dizaines de centimètres, par exemple entre 20 cm et 200 cm. Le rayon du point auquel les bielles sont liées aux cames peut être de plusieurs dizaines de millimètres, par exemple entre 20 mm et 80 mm.

La figure 4 montre un détail du mécanisme de montée-descente 6 en vue de face. S'il est possible de prévoir des galets décalés selon l'axe de pivotement de la came (C sur la figure 1), il peut être avantageux, pour la compacité du système, que les galets 62, 64 se chevauchent au moins partiellement dans un plan perpendiculaire à l'axe de pivotement de la came. A cette fin, le premier châssis 21 peut comprendre une encoche 211 qui évite une interférence mécanique entre le premier châssis 21 et le galet 64 du second châssis 41. L'encoche est suffisamment grande pour laisse libre tout mouvement du galet 64.

La figure 4 met également en évidence le fait que les galets suiveurs 62, 64 sont décalés l'un par rapport à l'autre, suivant une direction transversale horizontale perpendiculaire à l'axe de pivot de la came. Les axes de rotation des deux galets 62, 64 sont typiquement parallèles à l'axe C de pivot de la came 61, et peuvent être disposés de part et d'autre de l'axe C de pivot de la came (ou de part et d'autre de l'axe vertical Z passant par le centre de la came 61).

Un tel décalage autorise un déphasage entre les montée/descente des deux ensembles 2, 4, alors que les deux galets 62, 64 roulent en décalage temporel sur une portion commune du chemin de roulement pour les deux galets. En effet, les galets 62 et 64 parcourent chacun une portion du chemin de roulement 611 lors du pivotement de la came 61 et une certaine portion du chemin de roulement est commune aux parcours des deux galets. Cet aspect est également observable sur la figure 3, où l'on peut imaginer les positions intermédiaires entre les positions qui sont dessinées.

La portion commune est identifiée sur la figure 5. Elle peut être une portion centrale entre les deux positions extrêmes du chemin 611, en particulier entre les deux butées 612, 613. Le chemin de roulement s'étend du point P1 au point P4. La longueur du chemin de roulement est la distance curviligne entre P1 et P4. La portion commune s'étend de P1 à P2. Sa longueur peut représenter entre 10 et 30% de la longueur du chemin de roulement. L'angle formé par la portion commune (δ) peut être compris entre 10 et 60°. Cette portion commune peut correspondre à la zone notée E sur la figure 2.

Les galets peuvent être décalés selon la direction C et/ou peuvent avoir une largeur différente dans la direction C. Ainsi, lorsque les galets ne se chevauchent que partiellement dans le plan perpendiculaire à C, la portion commune n'est pas aussi large dans la direction C que les galets.

Si la figure 1 montre un moteur 100 entraînant indirectement les cames, la figure 6 illustre une alternative dans laquelle la came 61 peut être formée directement sur le rotor 101 du moteur. Dans cet exemple, le moteur 100 est à rotor externe, il a donc un arbre fixe avec l'axe C et un corps tubulaire tournant. La came 61 peut être rapportée sur le rotor 101 ou être venue de matière avec celui-ci. La figure 6 montre également que la troisième came 81 peut être montée sur le même rotor 101. Cette solution améliore encore la compacité et la simplicité de la table de transfert.

### Liste des signes de référence

- 1 : Table de transfert
- 100 : moteur électrique
- 101 : rotor du moteur électrique
- 2 : Premier ensemble convoyeur
- 21 : Châssis du premier ensemble convoyeur
- 211 : Encoche dans le premier châssis
- 22 : Eléments de convoyeur du premier ensemble
- 23 : Premier plan de convoyage
- 4 : Second ensemble convoyeur
- 41 : Châssis du second ensemble convoyeur
- 42 : Eléments de convoyeur du second ensemble
- 43 : Second plan de convoyage
- 6 : système de montée-descente
- 61 : came
- 611 : chemin de roulement de la came
- 612 : première butée
- 613 : seconde butée
- 614 : orifice central de la came
- 615 : orifice déporté de la came
- 62 : roulement du premier ensemble coopérant avec la came 61
- 64 : roulement du second ensemble coopérant avec la came 61
- 71 : seconde came
- 72 : roulement du premier ensemble coopérant avec la came 71
- 74 : roulement du second ensemble coopérant avec la came 71
- 81 : troisième came
- 91 : quatrième came
- A : direction de convoyage du premier ensemble 2
- B : direction de convoyage du second ensemble 4
- C : axe de pivot de la première came 61
- D : axe de pivot de la seconde came 71
- E, F, G : zones du chemin de roulement 611

## Revendications

1. Table de transfert (1) comprenant :
a. un premier ensemble (2) comprenant un premier châssis (21) portant une pluralité de premiers éléments de convoyeur (22) espacés deux à deux et définissant un premier plan (23) de convoyage d'articles ;
b. un second ensemble (4) comprenant un second châssis (41) portant une pluralité de seconds éléments de convoyeur (42) espacés deux à deux et définissant un second plan (43) de convoyage d'articles ; et
c. un mécanisme de montée-descente (6) du premier et/ou du second ensemble(s) (2, 4), comprenant une came (61) ayant un chemin de roulement (611) et une paire de galets suiveurs (62, 64) coopérant avec le chemin de roulement (611) de la came (61), l'un des galets suiveurs (62) étant porté par le premier châssis (21) et l'autre (64) étant porté par le second châssis (41), la came (61) étant mobile en pivotement entre :
i. une première position (a), dans laquelle le premier plan (23) est disposé au-dessus du second plan (43) ; et
ii. une seconde position (b), dans laquelle le second plan (43) est disposé au-dessus du premier plan (23).

2. Table de transfert (1) selon la revendication 1, **caractérisée en ce que** la came (61) est une première came et la paire de galets suiveurs (62, 64) est une première paire, le mécanisme de montée-descente comprenant une seconde came (71) et une seconde paire de galets suiveurs (72, 74), l'un des galets suiveurs (72) de la seconde paire étant porté par le premier châssis (21) et l'autre (74) étant porté par le second châssis (41).

3. Table de transfert (1) selon la revendication 2, **caractérisée en ce que** le mécanisme de montée-descente (6) comprend une bielle (65) reliant la première came (61) à la seconde came (71), la bielle (65) étant rattachée par pivot à la première came (61) et à la seconde came (71) en des points respectifs tels que le mouvement des cames (61, 71) s'opère dans des sens opposés.

4. Table de transfert (1) selon la revendication 2, **caractérisée en ce que** le mécanisme de montée-descente (6) comprend une bielle reliant la première came (61) à la seconde came(71), la bielle étant rattachée par pivot à la première came (61) et à la seconde came (71) en des points respectifs tels que le mouvement des cames (61, 71) s'opère dans des sens identiques.

5. Table de transfert selon la revendication 1, **caractérisée en ce que** le chemin de roulement (611) présente une ou deux butées (612, 613) de fin de course angulaire.

6. Table de transfert selon l'une des revendications 2 à 4, **caractérisée en ce que** la première et la seconde cames (61, 71) comprennent chacune une ou deux butées (612, 613) de fin de course angulaire configurées d'une manière telle que lorsqu'une des butées (612, 613) ou la butée de la première came (61) engage un galet (62, 64) porté par le premier châssis (21), respectivement porté par le second châssis (41), une des butées ou la butée de la seconde came (71) engage simultanément un galet (72, 74) porté par le premier châssis (21), respectivement porté par le second châssis (41).

7. Table de transfert selon l'une des revendications 1 à 6, **caractérisée en ce qu'**elle comprend un moteur électrique (100) disposé coaxialement à l'axe (C) de pivotement de la (première) came (61).

8. Table de transfert selon la revendication précédente, **caractérisée en ce que** le moteur électrique (100) est à rotor extérieur (101), la (première) came (61) étant formée ou rapportée sur le rotor extérieur (101).

9. Table de transfert selon l'une des revendications 1 à 8, **caractérisée en ce que** le chemin de roulement (611) comprend une portion dite commune (P2P3, E) sur laquelle roulent l'un (62) puis l'autre (64) des galets lors du pivotement de la came (61) de la première position (a) jusqu'à la seconde position (b).

10. Table de transfert selon la revendication 9, **caractérisée en ce que** le chemin de roulement (611) a une longueur curviligne (P1P4) et la portion commune (P2P3, E) s'étend sur 10 à 30% de la longueur curviligne du chemin de roulement (611).

11. Table de transfert selon la revendication 9 ou 10, **caractérisée en ce que** la portion commune s'étend sur un angle (α, δ) du chemin de roulement (611) compris entre 10° et 60°.

12. Table de transfert selon l'une des revendications 1 à 11, **caractérisée en ce qu'**elle comprend une troisième came (81) et une quatrième came (91), ainsi qu'une troisième paire de galets suiveurs et une quatrième paire de galets suiveurs, les troisième et quatrième cames (81, 91) et paires étant agencées de symétriquement aux première et seconde cames (61, 71) et paires (62, 64, 72, 74), par rapport à un plan médian de la table de transfert.

13. Table de transfert selon l'une des revendications 1 à 12, **caractérisée en ce que** le débattement angulaire ((α+γ)/2) entre la première position et la seconde position est compris entre 30 et 180° ; et/ou **en ce que** la ou les cames (61, 71, 81, 91) peuvent être pivotées dans une position angulaire médiane (c) dans laquelle le premier et le second plans (23, 43) coïncident.

14. Procédé de transfert d'articles au moyen de la table de transfert (1) selon l'une des revendications 1 à 13, le procédé comprenant : le convoyage d'un article par le premier ensemble (2), le pivotement de la came (61) depuis la première position (a) vers la seconde position (b), puis le convoyage de l'article par le second ensemble (4).

15. Procédé selon la revendication 14, dans lequel le pivotement de la came (61) depuis la première position (a) vers la seconde position (b) s'effectue selon un premier sens de pivotement et le procédé comprend en outre une étape de pivotement de la came (61) depuis la seconde position (b) vers la première position (a) s'effectuant selon un second sens de pivotement, opposé au premier sens de pivotement.
